# EUROPÄISCHE PATENTSCHRIFT

(11) **EP 0 711 226 B1**
(45) Veröffentlichungstag und Bekanntmachung des Hinweises auf die Patenterteilung: **26.08.1998**
(21) Anmeldenummer: 94904122.2
(22) Anmeldetag: 11.01.1994
(51) Int. Cl.: B60C 3/02, B60C 15/02

(54) **SCHLAUCHREIFEN MIT FELGE UND VERFORMUNGSZONE IM BEREICH DER FELGE**
TUBE TYRE WITH A RIM AND WITH A FLEXING ZONE IN THE AREA OF THE RIM
PNEUMATIQUE A CHAMBRE SEPAREE AVEC JANTE ET ZONE DE DEFORMATION AU NIVEAU DE LA JANTE

(30) Priorität: 14.07.1993 CZ 139293
(43) Veröffentlichungstag der Anmeldung: 15.05.1996
(73) Patentinhaber: Klabal, Miloslav, 765 02 Otrokovice (CZ)
(72) Erfinder: Klabal, Miloslav, 765 02 Otrokovice (CZ)
(74) Vertreter: Dusil, Vladimir, Dipl.-Ing.
(86) Internationale Anmeldenummer: CZ9400001
(87) Internationale Veröffentlichungsnummer: WO9502517

(56) Entgegenhaltungen:
- EP-A- 0 082 827
- EP-A- 0 182 365

## Beschreibung

Die Erfindung betrifft eine Anordnung, bestehend aus einer Felge und einem Schlauchreifen, der durch eine luftdichte Schicht sowie eine die luftdichte Schicht umhüllende Tragdecke gebildet ist, eine Lauffläche sowie Seitenwände aufweist und in seinem der Felge zugewandten Bereich mit zwei im Abstand ausgebildeten umlaufenden Profilen versehen ist.

Eine derartige Anordnung ist z. B. aus der europäischen Patentanmeldung EP 0 082 827 A1 bekannt. Der Schlauchreifen der vorbekannten Anordnung weist in seinem der Felge zugewandten Bereich ein mit einer Gummischicht versehenes Band auf, das auf einer radial äußeren Auflagefläche der im Querschnitt geschlossenen Felge aufliegt. Das erwähnte Band ist mit zwei seitlich angeordneten umlaufenden Profilen versehen, die im montierten Zustand des Schlauchreifens sich an den Randbereichen der Felge radial abstützen. Zwischen den Profilen sind zylindrische Vorsprünge ausgebildet, die von Öffnungen aufgenommen werden, die im mittleren Bereich der Felge vorgesehen sind. Durch die Vorsprünge werden Relativbewegungen zwischen Felge und Schlauchreifen wirksam verhindert.

Weniger vorteilhaft ist bei der vorbekannten Anordnung die komplizierte, aufwendige Montage anzusehen, bei der ein genaues Positionieren der Vorsprünge gegenüber den Öffnungen in der Felge erforderlich ist. Außerdem muß die Wirkung der Vorsprünge oft durch Aufbringen eines geeigneten Klebstoffes auf die Felge unterstützt werden.

Ein weiterer Nachteil der vorbekannten Anordnung besteht im ungünstigen Deformationsverhalten des Schlauchreifens, desssen radial innenliegender Bereich auf dem mittleren Bereich der Felge aufliegt, so daß in diesem Bereich bei einer Belastung des Schlauchreifens keine Verformung stattfinden kann.

Es ist daher Aufgabe der vorliegenden Erfindung Maßnahmen anzugeben, die eine wesentliche Vereinfachung der Montage des Schlauchreifens auf die Felge ermöglichen. Gleichzeitig soll das Deformationsverhalten des auf der Felge montierten Schlauchreifens unter Beibehaltung der hohen Funktionssicherheit verbessert werden.

Diese Aufgabe wird nach einer ersten erfindungsgemäßen Lösung dadurch gelöst, daß die Felge in ihrem dem Schlauchreifen zugewandten Bereich offen ausgebildet ist und zwei gegenüberliegende Felgenarme aufweist, wobei die Profile eine Verformungszone begrenzen und eine elastische bzw. eine Gelenkverbindung zwischen Felge und Schlauchreifen gewährleisten.

Eine zweite erfindungsgemäße Lösung der vorhin gestellten Aufgabe besteht darin, daß die Felge in ihrem dem Schlauchreifen zugewandten Bereich offen ausgebildet ist und Umfangsnuten aufweist, die die Profile aufnehmen.

Vorteilhafte Weiterbildungen des Erfindungsgegenstandes sind in den Unteransprüchen 2 bis 6 bzw. 8 bis 10 aufgeführt.

Die Erfindung wird in der nachfolgenden Beschreibung an zwei Ausführungsbeispielen im Zusammenhang mit der beiliegenden Zeichnung näher erläutert. In der Zeichnung zeigt:
Fig. 1 eine Schnittdarstellung einer ersten Ausführung der erfindungsgemäßen Anordnung, die insbesondere für Fahrradsport besonders geeignet ist,
Fig. 2 eine die Position der Profilblöcke vor und nach dem Aufpumpen des Schlauchreifens darstellende Teilansicht gemäß Fig. 1,
Fig. 3 eine Schnittdarstellung eines Profilblocks für einen insbesondere für Personenkraftwagen geeigneten Schlauchreifen,
Fig. 4 eine Schmittdarstellung einer zweiten Ausführung der erfindungsgemäßen Anordnung, die insbesondere für Fahrradsport besonders geeignet ist, und
Fig. 5 eine Ausführungvariante der erfindungsgemäßen Anordnung nach Fig. 4.

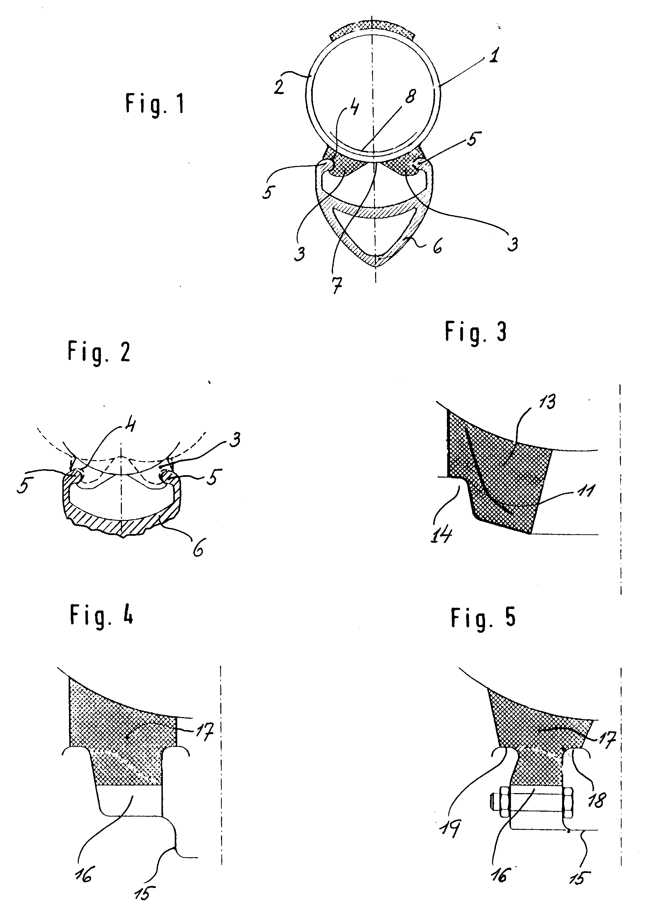

Die in Fig. 1 dargestellte erfindungsgemäße Anordnung besteht im wesentlichen aus einer Felge 6 sowie einem Schlauchreifen, der durch eine eine luftdichte Schicht 2 umhüllende Tragdecke 1 gebildet ist. Die Tragdecke 1, die wie bei einem konventionellen Schlauchreifen durch Verkleben oder Zusammennähen ihrer Ränder zu einem schlauchförmigen Gebilde hergestellt wird, weist in ihrem der Felge 6 abgewandten Bereich eine nicht näher bezeichnete Lauffläche sowie zwei Seitenwände auf. In ihrem der Felge 6 zugewandten Bereich ist die Tragdecke 1 mit zwei im Abstand voneienander ausgebildeten umlaufenden Profilen 3 versehen, die mit an der Felge 6 ausgebildeten Felgenarmen 5 zusammenwirken. In ihrem über den Profilen 3 liegenden Bereich weist die Tragdecke 1 eine innere Versteifung 8 auf, deren Breite 10 bis 140 % der Reifenbreite beträgt. Die Versteifung 8 kann mit einer in der Tragdecke 1 integrierten Umfangsversteifung sowie einer äußeren Umfangsversteifung ergänzt werden. Mit einer entsprechenden Versteifung 11 sind auch die Profile (13, Fig. 3) versehen.Außerdem kann eine Versteifung zwischen den Profilen 3 und den Felgenarmen 5 angeordnet sein. Die Versteifungen sind aus einem in Umfangsrichtung wenig dehnbaren Material, beispielsweise aus Gewebeband oder einem anderen geeigneten Werkstoff, hergestellt.

Wie Fig. 1 weiter zu entnehmen ist, ist die Felge 6 in ihrem dem Schlauchreifen zugewandten Bereich offen ausgebildet, wobei die Profile 3, die die Felgenarme 5 aufnehmende Ausnehmungen 4 aufweisen, eine Verformungszone 7 begrenzen. Die Profile 3 können dabei mindestens teilweise voneinander getrennt bzw. am Umfang mindestens teilweise unterbrochen ausgebildet sein. Durch die Abstützung der Profile 3 an den Felgenarmen 5 entsteht eine elastische bzw. eine Gelenkverbindung zwischen Felge 6 und Schlauchreifen. Die Profile 3 können dabei aus Gummi, Kunststoff oder anderen elastischen Werkstoffen bestehen und können ggf. durch Fasern, Kord oder Gewebe verstärkt werden.

Der in Fig. 2 gezeigten Teilansicht ist zu entnehmen, daß die Profile 3 durch Aufpumpen des Schlauchreifens auseinander gespreizt werden und mit ihren Ausnehmungen 4 die Felgenarme 5 umgreifend, sich an diesen abstützen. Die Profile 3 der in Fig. 1 und 2 dargestellten Anordnung sind vorzugsweise im Querschnitt dreieckförmig ausgebildet. Diese Anordnung ist insbesondere für Fahrradsport geeignet.

Das in Fig. 3 gezeigte Profil 13 ist im Querschnitt trapezförmig ausgebildet und vorzugsweise für eine PKW-Felge 14 geeignet. Dabei ist es sehr wichtig, daß die Breite des Berührungsbereichs zwischen dem Profil 13 und der lediglich angedeuteten Tragdecke 1 eine einwandfreie, zuverlässige Verbindung gewährleistet die z. B. durch Vulkanisieren hergestellte werden kann.

Bei der in Fig. 4 und 5 dargestellten zweiten Ausführung der erfindungsgemäßen Anordnung ist die teilweise weggebrochene Felge 15 in ihrem dem Schlauchreifen zugewandten Bereich offen ausgebildet und weist zwei gegenüberliegende Umfangsnuten 16 auf, die die vorhin erwähnten Profile 17 aufnehmen. Die Umfangsnut 16 ist bei der in Fig. 5 gezeigten Ausführung einerseits durch einen radial äußeren Randbereich 18 der Felge 15 und andererseits durch ein vorzugsweise flanschartiges zweites Teil 19 begrenzt.

Ein konkretes Ausführungsbeispiel der Erfindung der Größe 20-622 wies die folgenden Parameter auf:
- Laufflächenbreite:: 26 mm
- Breite des Schlauchreifenprofils: 21 mm
- Höhe des Schlauchreifenprofils: 22 mm
- Breite der inneren Gewebeverstärkung: 22 mm
- Die Form der erfindungsgemäßen Profile:: entspricht der Form der Felgenarme mit den Abmessungen 13-662 nach ERTRO (s. Fig. 1)
- Material der Profile:: Gummi, Härte 70° Sh, Zugfestigkeit 20 MPa, Bruchdehnung 440 %, Elastizität 32%

Die Verwendung dieses Schlauchreifens auf der Felge 13-662 ermöglicht Fahrten ohne Umfangsdurchdrehen oder -verrutschen, und zwar ohne Verwendung eines Klebstoffes oder einer direkten mechanischen Verbindung im Druckbereich von 200 kPa bis zu einem Sicherheitsdruckwert von 2 MPa, d.h. im gesamten Verwendungsbereich des Schlauchreifens.

## Patentansprüche

1. Anordnung, bestehend aus einer Felge (6) und einem Schlauchreifen, der durch eine luftdichte Schicht (2) sowie eine die luftdichte Schicht (2) umhüllende Tragdecke (1) gebildet ist, eine Lauffläche sowie Seitenwände aufweist und in seinem der Felge (6) zugewandten Bereich mit zwei im Abstand voneinander ausgebildeten umlaufenden Profilen (3) versehen ist, **dadurch gekennzeichnet,** daß die Felge (6) in ihrem dem Schlauchreifen zugewandten Bereich offen ausgebildet ist und zwei gegenüberliegende Felgenarme (5) aufweist, wobei die Profile (3) eine Verformungszone (7) begrenzen und durch Zusammenwirken mit den Felgenarmen (5) eine elastische bzw. eine Gelenkverbindung zwischen Felge (6) und Schlauchreifen gewährleisten.

2. Anordnung nach Anspruch 1 **dadurch gekennzeichnet,** daß die Profile (3) mit Ausnehmungen (4) versehen sind, die die Folgenarme (5) aufnehmen.

3. Anordnung nach Anspruch 1 oder 2 **dadurch gekennzeichnet,** daß die Profile (3) mindestens teilweise voneinander getrennt sind.

4. Anordnung nach einem der Ansprüche 1 bis 3 **dadurch gekennzeichnet,** daß die Profile (3) am Umfang mindestens teilweise unterbrochen sind.

5. Anordnung nach einem der Ansprüche 1 bis 4 **dadurch gekennzeichnet,** daß die Profile (3) mit einer Versteifung (11) versehen sind.

6. Anordnung nach einem der Ansprüche 1 bis 5 **dadurch gekennzeichnet,** daß die Tragdecke (1) in ihrem über den Profilen (3) liegenden Bereich eine Versteifung (8) aufweist.

7. Anordnung, bestehend aus einer Felge (15) und einem Schlauchreifen, der durch eine luftdichte Schicht (2) sowie eine die luftdichte Schicht (2) umhüllende Tragdecke (1) gebildet ist, eine Lauffläche sowie Seitenwände aufweist und in seinem der Felge (15) zugewandten Bereich mit zwei im Abstand voneinander ausgebildeten umlaufenden Profilen (17) versehen ist, **dadurch gekennzeichnet,** daß die Felge (15) in ihrem dem Schlauchreifen zugewandten Bereich offen ausgebildet ist und Umfangsnuten (16) aufweist, die die Profile (17) aufnehmen.

8. Anordnung nach Anspruch 7 **dadurch gekennzeichnet,** daß die Umfangsnuten (16) durch miteinander verschraubte Teile (18, 19) begrenzt sind.

9. Anordnung nach einem der Ansprüche 1 bis 8 **dadurch gekennzeichnet,** daß die Profile im Querschnitt dreieckförmig ausgebildet sind.

10. Anordnung nach einem der Ansprüche 1 bis 8 **dadurch gekennzeichnet,** daß die Profile im Querschnitt trapezförmig ausgebildet sind.

## Claims

1. Arrangement incorporating a rim (6) and a tubular tyre comprising an air-impermeable layer (2) and a carrying casing (1) enveloping the air-impermeable layer, the aforesaid tubular tyre being provided with a tread and sidewalls and two circumferential profiles (3) separated from each other by a certain distance in the part facing the rim (6) wherein the rim (6) is open and provided with two opposite rim flanges (5) in the area facing the tubular tyre, the aforesaid profiles (3) limiting a flexing zone (7) between the two opposite rim flanges (5) and providing an elastic or a hinge joint between the rim (6) and the tubular tyre.

2. Arrangement according to claim 1, wherein the profiles (3) are provided with recesses (4) designated to receive the rim flanges (5).

3. Arrangement according to claim 1 or 2, wherein the profiles (3) are separated, at least partially, from each other.

4. Arrangement as set forth in any of claims 1 or 3, wherein the profiles (3) are interrupted, at least partially, around their circumference.

5. Arrangement as set forth in any of claims 1 or 4, wherein the profiles (3) are provided with a reinforcement (11).

6. Arrangement as set forth in any of claims 1 or 5, wherein the carrying casintg (1) is provided with a reinforcement (8) in the area over the profiles (3).

7. Arrangement incorporating a rim (15) and a tubular tyre comprising an air-impermeable layer (2) and a carrying casing (1) enveloping the air-impermeable layer (2), the aforesaid tubular tyre being provided with a tread and sidewalls and two circumferential profiles (17) separated from each other by a certain distance in the part facing the rim (15) wherein the rim (17) is open and provided with circumferential grooves (16) in the region facing the tubular tyre in which the profiles (17) are placed.

8. Arrangement according to claim 7, wherein the circumferential grooves (16) are limited by screw-joined parts (18,19).

9. Arrangement as set forth in any of claims 1 to 8, wherein the profiles are of a triangular cross-section.

10. Arrangement as set forth in any of claims 1 to 8, wherein the profiles are of a trapeozoidal cross-section.

## Revendications

1. Disposition consistent d'une jante et d'un boyau qui est formé par une couche (2) étanche à air, pourvu d'une bande de roulement et des flancs, et, en outre, dans sa partie orientée vers la jante, de deux profils (3) circulaires créés à certaine distance mutuelle caracterisé en ce que la jante (6) est ouverte dans sa partie orientée vers le boyau et pourvue de deux bras (5) opposés, où les profiles limitent la zone de déformation et, en coopérant avec les bras (5) de la jante, assurent l'assemblage élastique, resp. articulé entre la jante (6) et le boyau.

2. Disposition selon la revendication 1 caracterisé en ce que les profiles (3) sont pourvus des évidements (4), dans lesquels sont placés les bras (5) de la jante.

3. Disposition selon la revendication 1 ou 2 caracterisé en ce que les profiles (3) sont séparés, du moins partiellement, l'un de l'autre.

4. Disposition selon l'une des revendications 1 à 3 caracterisé en ce que les profiles (3) sont interropus sur leur périmètre du moins partiellement.

5. Disposition selon l'une des revendications 1 à 4 caracterisé en ce que les profiles (3) sont pourvus d'un renforcement (11).

6. Disposition selon l'une des revendications 1 à 5 caracterisé en ce que l'enveloppe portante (1) est munie d'un renforcement (8) dans sa partie se trouvant au-dessus des profiles.

7. Disposition consistent d'une jante (15) et d'un boyau qui est formé par une couche (2) étanche à air et par une enveloppe (1) portante qui entoure la couche (2) étanche à air et est pourvue d'une bande de roulement et des flancs, elle est munie, en outre, dans sa partie orientée vers la jante, de deux profils (17) circulaires créés à certaine distance caracterisé en ce que la jante (15) est ouverte dans sa partie orientée vers le boyau et est pour'vue des rainures (16) périphériques qui recoivent les profiles (17).

8. Disposition selon la revendication 7 caracterisé en ce que les rainures (16) périphériques sont limitées par des parties composantes mutuellement vissées (18,19).

9. Disposition selon l'une des revendications 1 à 8 caracterisé en ce que les profiles ont une section triangulaire.

10. Disposition selon l'une des revendications 1 à 8 caracterisé en ce que les profiles ont une section trapézoidale.
